Europäisches Patentamt

(19) **European Patent Office** — (11) Publication number: **0 030 419**

Office européen des brevets — **A1**

(12) **EUROPEAN PATENT APPLICATION**

(21) Application number: 80304014.6

(51) Int. Cl.³: **B 23 K 35/36**, B 23 K 9/00

(22) Date of filing: 11.11.80

(30) Priority: 21.11.79 GB 7940229

(71) Applicant: GKN FORGINGS LIMITED, P.O. Box 4, Bromsgrove Worcester B60 3DZ (GB)
Applicant: HUNT BROTHERS (OLDBURY) LIMITED, West Bromwich Street Oldbury, Warley West Midlands B69 3AT (GB)

(43) Date of publication of application: 17.06.81 Bulletin 81/24

(72) Inventor: Smith, Thomas Henry, 59, Lower Street Tettenhall, Wolverhampton West Midlands WV6 9LW (GB)
Inventor: Baker, Cyril Millward, 19 Victoria Avenue, Halesowen West Midlands (GB)

(74) Representative: Robertson, Bernard Collett et al, Guest, Keen & Nettlefolds Limited Group Patents & Licensing Department Group Head Office P.O. Box 55, Smethwick Warley West Midlands, B66 2RZ (GB)

(84) Designated Contracting States: **AT BE CH DE FR GB IT LI LU NL SE**

(54) Welding process and electrode therefor.

(57) A manual metal arc process for depositing weld metal on a cast iron workpiece is accomplished by using a welding electrode having a cast iron core with a coating of limestone and ferro-silicon. The proportions of limestone and ferrosilicon in the coating are selected so as to give a carbon equivalent value in the deposited weld metal substantially equal to the carbon equivalent value in the workpiece als calculated from the formula $C\ eq = total\ C\% + \dfrac{Si\% + P\%}{3}$.

ACTORUM AG

79.051/BT          Welding process and electrode therefor

This invention relates to the welding of cast iron by electric arc welding, particularly by the process known as Manual Metal Arc welding, wherein an electric arc is struck between a welding electrode, in the form of a wire or rod, and the workpiece.

Attempts have been made to weld cast iron components by electric arc welding processes wherein the welding electrode has comprised either a nickel rod or an alloy thereof but such welds have been found to possess little structural strength and have only been suitable for what may be termed "cosmetic" welds. It has also been proposed to weld cast iron components using a gas e.g.oxy-acetylene in the presence of a powder flux but such welding has limited applications.

Objects of the present invention are to provide a welding electrode suitable for use in electric arc welding of cast iron workpieces and a process of electric arc welding of such workpieces.

In accordance with one aspect of the invention there is provided a process of electric arc welding a cast iron workpiece comprising preheating the workpiece and striking an arc between a welding electrode and the workpiece to melt the electrode onto the workpiece, the electrode comprising a cast iron rod comprising, by weight, 3.7% - 4.0% total carbon, 1.1% - 1.4% silicon, 0.05% - 1.0% manganese, 0.06% maximum sulphur, 0.08% maximum phosphorus with the balance being iron and incidental impurities; the electrode being melted onto the workpiece in the presence of a powder comprising 1-3 parts by weight limestone and 7-9 parts by weight ferro-silicon; the proportions of which are chosen to give a carbon equivalent value in th deposited weld metal substantially equal to the carbon eq ivalent value in the workpiece.

The electrode used in the process may comprise a solid cast iron core rod with a coating thereon, the said powder together with a binder comprising the coating and the coating comprising 5% - 25% by weight of the electrode as a whole.

Thus according to another aspect of the invention there is provided a welding electrode in rod form for use in electric arc welding of a cast iron workpiece wherein the electrode comprises a solid cast iron core and a coating thereon; the core comprising, by weight, 3.7% - 4.0% total carbon, 1.1% - 1.4% silicon, 0.05% - 1.0% manganese, 0.06% maximum sulphur, 0.08% maximum phosphorus with the balance iron and incidental impurities, and the coating containing 1-3 parts by weight limestone and 7-9 parts by weight ferro-silicon together with a binder; the coating comprising 5% - 25% by weight of the electrode as a whole.

Alternatively the electrode used in the process may comprise a solid cast iron rod with the said powder being fed independently to the welding site.

It will be appreciated that Grades 12 to 23 of cast iron produced in accordance with BSS 1452 generally comprise the following constituents by weight, 2.0% - 3.5% total carbon, 1.4% - 2.8% silicon, 0.5% - 0.8% manganese, up to 0.15% sulphur and up to 1.2% phosphorus with the balance being iron and incidental impurities. The carbon equivalent value, as calculated from the formula $C \, eq = total \, C\% + \frac{Si\% + P\%}{3}$, is within the range 3.5 - 4.5. Other alloying elements such as nickel, chromium, molybdenum and copper may be introduced for special grades of cast iron.

In order to weld cast iron of grades 12 to 23 it is necessary to preserve the carbon equivalent value in the deposited weld metal but if one utilised a simple cast iron welding electrode in an electric arc welding process there would be a serious loss of free carbon due to carbon being burnt off in the arc. Under these circumstances the weld metal is not recognizable as cast iron being white rather than grey and it is virtually unmachinable. Its mechanical properties are characterised by low tensile strength and poor adhesion to the parent metal at the heat affected zone.

However the use of a welding electrode in accordance with the invention permits the use of a single cast iron core composition with differing proportions of powder, either as a coating on the core or as an independent feed to the welding site, to preserve the carbon equivalent value in the deposited weld metal substantially equal to that of any cast iron workpiece according to grades 12 to 23 of BSS 1452.

A more specific example of a welding process in accordance with the invention will now be described wherein the welding process known as Manual Metal Arc welding is used to lay down a weld metal deposit on a cast iron workpiece. A suitable D.C. power supply is utilised to give an output of 100 - 2100 amps in order that powder coated welding electrodes in accordance with the invention having core diameters of 3mm - 37mm can be utilised; the core diameter of the electrode being dependent upon the characteristic of the weld to be made. The polarity can be positive or negative, again being dependent upon the workpiece, but tests to date have shown that a negative polarity to the electrode gives better weld metal penetration.

The area of the cast iron workpiece to be welded is prepared by removing all cracks, inclusions and other defects by using either a carbon-air electric arc gouging process or by machining away the defective areas. After the defects have been removed the workpiece is preheated to a temperature within the range 500°C to 700°C and placed in a thermal bath to retain the workpiece at this temperature throughout the welding process. Such a thermal bath may conveniently comprise a refractory lined containment provided with

burners.

An electric arc is then struck between a welding electrode in accordance with the invention and the workpiece to provide a pool of molten metal and slag which is a residue of the electrode coating, the slag floating on the surface of the weld pool. It is convenient for the workpiece to be inclined at an angle to the horizontal so that the slag moves away from the weld pool and solidifies on the cooling weld pool behind the molten metal. This covering of solidified slag acts as an effective heat retainer.

On completion of the welding process the workpiece is placed in a heat treatment oven and stress relieved by heating to a temperature of 550°C to 600°C for a period dependent upon the cross-sectional dimensions of the deposited weld metal or the ruling section of the workpiece, whichever is greater. Finally the workpiece is allowed to cool slowly back to ambient temperature. By using this process and the welding electrode according to the invention, a weld is achieved which mechanically and metallurgically bonds the parent and electrode metals together. The deposited weld metal and that of the workpiece are of similar tensile strength and have similar carbon equivalent as calculated from the carbon equivalent formula. The weld area is fully machinable and is free of slag inclusion and tests have shown a uniform hardness pattern across the deposited weld metal and the heat affected zone with no embrittlement or loss of carbon.

It has been stated hereinbefore that the coating provided on the welding electrode contains 1-3 parts of limestone and 7-9 parts of ferro-silicon together with a binder. The proportions of limestone and ferro-silicon are chosen so as to achieve a carbon equivalent value in the deposited weld metal substantially equal to the carbon equivalent value in the workpiece as calculated from the carbon equivalent formula set out hereinbefore. The coating is made from finely ground powders of limestone and ferro-silicon bonded together by the binder which may conveniently comprise sodium silicate. The ferro-silicon is a compound of 70% - 75% silicon and 20% - 25% iron powder, or alternatively 50% - 55% silicon and 45% - 50% iron powder.

During the welding process a percentage of the silicon and carbon survive the electric arc and become combined with the core rod of cast iron. The carbon content of the core rod (now weld metal) is maintained and the silicon content can be increased to improve the machineability of the weld metal and to increase the carbon in accordance with the carbon equivalent formula. The silicon and carbon addition carried from the electrode coating ensures that the deposited weld metal is not brittle. Hardness tests have shown that only marginal differences occur when the hardness is checked at points on the weld metal, in the heat affected zone and in the parent metal. Test pieces taken from the deposited weld metal have shown that the tensile strength of the weld metal is in each case equivalent to that of the parent metal. Chemical analysis of the deposited weld metal has shown that the percentage of free carbon has fallen slightly for example from 3.7% - 2.9% but when the carbon equivalent formula is utilised the carbon equivalent value of the weld metal is substantially equal to the carbon equivalent value of the parent metal.

CLAIMS

1. A process of electric arc welding a cast iron workpiece comprising preheating the workpiece and striking an arc between a welding electrode and the workpiece to melt the eletrode onto the workpiece,characterised in that the electrode comprises a cast iron rod comprising, by weight, 3.7% - 4.0% total carbon, 1.1% - 1.4% silicon, 0.05% - 1.0% manganese, 0.06% maximum sulphur, 0.08% maximum phosphorus with the balance being iron and incidental impurities and in that the electrode is melted onto the workpiece in the presence of a powder comprising 1-3 parts by weight limestone and 7-9 parts by weight ferro-silicon; the proportions of which are chosen to give a carbon equivalent value in the deposited weld metal substantially equal to the carbon equivalent value in the workpiece.

2. A process according to claim 1 further characterised in that the electrode comprises a solid cast iron core rod with a coating thereon, the said powder together with a binder comprising the coating and the coating comprising 5% - 25% by weight of the electrode as a whole.

3. A process according to claim 2 further characterised in that the binder comprises sodium silicate.

4. A process according to claim 1 further characterised in that the electrode comprises a solid cast iron rod and that the said powder is fed independently to the welding site.

5. A process according to claim 2 further characterised in that the workpiece is pre-heated to a temperature within the range 500°C to 700°C and is located in a thermal bath to retain the workpiece within said temperature range throughout the welding process.

6.     A process according to claim 5 further characterised in that an electrical direct current of between 100 and 2,100 amps is utilised to maintain the electric arc during the welding process.

7.    A welding electrode in rod form for use in electric arc welding of a cast iron workpiece wherein the electrode comprises a solid cast iron core and a coating thereon characterised in that the core comprises by weight, 3.7% - 4.0% total carbon, 1.1% -1.4% silicon, 0.05% - 1.0% manganese, 0.06% maximum sulphur, 0.08% maximum phosphorus with the balance iron and incidental impurities and in that the coating contains 1-3 parts by weight limestone and 7-9 parts by weight ferro-silicon together with a binder; the coating comprising 5% - 25% by weight of the electrode as a whole.

## DOCUMENTS CONSIDERED TO BE RELEVANT

| Category | Citation of document with indication, where appropriate, of relevant passages | Relevant to claim |
|---|---|---|
| | AT - B - 228 591 (WESTFÄLISCHE UNION AG)  + Totality + | 1,5 |
| | -- | |
| | DE - B - 1 292 997 (WESTFÄLISCHE UNION AG)  + Totality + | 1,3,7 |
| | -- | |
| | GB - A - 1 096 500 (MUREX WELDING PROC.)  + Totality + | 1,5,7 |
| | -- | |
| | GB - A - 1 090 724 (MUREX PROPRIETARY)  + Totality + | 1,3,7 |
| | -- | |
| | GB - A - 1 038 977 (ENGLISH ELECTRIC-ARC WELDING COMPANY)  + Claims + | 1,3,7 |
| | -- | |
| | US - A - 3 403 051 (K. FRANK et al.)  + Claims + | 1,3,7 |
| | ---- | |

**CLASSIFICATION OF THE APPLICATION (Int. Cl. ³)**

B 23 K 35/36

B 23 K 9/00

**TECHNICAL FIELDS SEARCHED (Int.Cl. ³)**

B 23 K

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | |
|---|---|
| X | The present search report has been drawn up for all claims |

| Place of search | Date of completion of the search | Examiner |
|---|---|---|
| VIENNA | 06-02-1981 | SLAMA |

EPO Form 1503.1  06.78